## Europäisches Patentamt

(19) **European Patent Office**

**Office européen des brevets**

(11) Veröffentlichungsnummer: **0 162 831**

**A1**

(12) # EUROPÄISCHE PATENTANMELDUNG

(21) Anmeldenummer: 85890082.2

(22) Anmeldetag: 28.03.85

(51) Int. Cl.⁴: **C 02 F 3/30**
C 02 F 3/12, C 02 F 3/20

(30) Priorität: 27.04.84 AT 1410/84

(43) Veröffentlichungstag der Anmeldung:
27.11.85 Patentblatt 85/48

(84) Benannte Vertragsstaaten:
CH DE FR IT LI NL SE

(71) Anmelder: **VOEST-ALPINE Aktiengesellschaft**
**Friedrichstrasse 4**
**A-1011 Wien(AT)**

(72) Erfinder: **Jahn, Kornel, Dipl.-Ing.**
**Seisgasse 14**
**A-1040 Wien(AT)**

(72) Erfinder: **Thiele, Friedrich, Dipl.-Ing.**
**Biesenfeldweg 12**
**A-4040 Linz(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Einrichtung zum Aufarbeiten von Abwasser.**

(57) Zum Nitrifizieren und Denitrifizieren bei der biologischen Abwasserreinigung wird ein turmförmiger Behälter (1) verwendet, in welchem ein Rohr (10) mit in Abstand von der Behälterwand angeordnetem Mantel zur Gänze unter den Flüssigkeitsspiegel eintauchend angeordnet ist. Die obere offene Stirnfläche (11) des Rohres (10) liegt somit ebenso wie die untere offene Stirnfläche (13) unterhalb des Flüssigkeitsspiegels. Die Zufuhr der Biomasse mündet in den Ringraum (15) oder den zentralen Raum des Rohres (10) und die Ableitung erfolgt jeweils aus dem anderen Raum. Einer der beiden Räume ist zusätzlich belüftet, wobei die Belüftung unten erfolgt und die durch den anderen Raum abwärts strömende flussige Phase an Sauerstoff ärmer geführt wird.

FIG. 1

## Einrichtung zum Aufarbeiten von Abwasser

Die Erfindung bezieht sich auf eine Einrichtung zum Aufarbeiten von Abwasser nach dem Belebtschlammverfahren, insbesondere zum Nitrifizieren und Denitrifizieren bei der biologischen Abwasserreinigung, mit einem turmförmigen Behälter und einem im Behälter angeordneten im wesentlichen parallel zur geometrischen Höhenlinie angeordneten, insbesondere rohrförmigen Mantel, dessen Mantelfläche in Abstand von der Innenwand des Behälters verläuft.

Für die biologische Abwasserreinigung nach dem Belebtschlammverfahren wurde bereits vorgeschlagen, die Biomasse in großen Belebtschlammbecken umzusetzen. Für die gewünschte biologische Umsetzung war es zunächst erforderlich, in einem ersten Verfahrensabschnitt die Biomasse einer intensiven Belüftung zu unterziehen, um die Umsetzung von Stickstoff-Wasserstoffverbindungen mit Sauerstoff zu Stickstoff-Sauerstoffverbindungen und eine organische Grundsubstanz zu erzielen. Die bei dieser Umsetzung gebildeten Nitrate bzw. Stickoxide wurden bisher anschließend in einem gesonderten großvolumigen Becken einer anaeroben Nachbehandlung unterzogen, um eine Denitrifikation zu erzielen und damit eine Überdüngung der Gewässer zu vermeiden. Nachteilig bei dieser bekannten Verfahrensweise ist der große Platzbedarf für die Belebtschlammbecken und die Tatsache, daß in Denitrifikationsbecken eine deutliche Tendenz des Schlammes zum Aufschwemmen beobachtet werden konnte.

Es wurde weiters bereits vorgeschlagen, das Belebtschlammverfahren in Türmen durchzuführen, um den Flächenbedarf für die erforderlichen Einrichtungen zu verringern. In derartigen Türmen konnte aber lediglich einer der beiden erforderlichen Verfahrensschritte ausgeführt werden und nach einer Nitrifikation blieben die Nachteile in Bezug auf die nachfolgende Denitrifikation unverändert.

Eine Einrichtung dieser Art ist beispielsweise der AT-PS 323 083 zu entnehmen. Bei dieser bekannten Ausbildung ist im Inneren des Behälters ein Mantel angeordnet, dessen Mantelfläche in Abstand von der Innenwand des Behälters verläuft. Bei vorgegebener Strömungsrichtung kann aber bei dieser bekannten Einrichtung der Außenraum und der Innenraum nur einmal durchströmt werden, wodurch eine effiziente Nitrifikation und Denitrifikation nicht durchführbar ist.

Die Erfindung zielt nun darauf ab, eine Einrichtung der eingangs genannten Art zu schaffen, mit welcher bei überaus geringem Flächenbedarf und geringer Pumpleistung eine vollständige Umsetzung, insbesondere ein effizientes Nitrifizieren und Denitrifizieren durchgeführt werden kann. Insbesondere zielt die Erfindung darauf ab, die erforderlichen Energiekosten zu senken und eine einfache Steuerungsmöglichkeit für den Sauerstoffeintrag in dem ersten Verfahrensabschnitt zu bieten. Zur Lösung dieser Aufgaben ist die erfindungsgemäße Einrichtung im wesentlichen dadurch gekennzeichnet, daß die Höhe des turmförmigen Behälters größer ist als jede der beiden Abmessungen in der Ebene der Standfläche, daß der Mantel zu beiden Stirnseiten offen ausgebildet ist, wobei die obere offene Stirnfläche unterhalb der Füllhöhe des Behälters und die untere offene Stirnfläche in Abstand von der Bodenwand des Behälters angeordnet ist, und daß ein Anschluß für die Zufuhr von Biomasse und Wasser im unteren Bereich des Behälters mündet und eine Einrichtung zur Belüftung derselben im unteren Bereich des Behälters zum Verteilen der belüfteten Biomasse und des Wassers in den zwischen Behälter und Mantel ausgebildeten Raum, insbesondere Ringraum, oder den vom Mantel umgebenen Raum sowie eine in den jeweils anderen der beiden Räume mündende Wasserableitung vorgesehen sind. Durch den innerhalb des Behälters angeordneten Mantel werden zwei gesonderte Räume geschaffen, in welchen intermittierend oxidiert und reduziert werden kann. Durch die Umwälzung des zu behandelnden Abwassers im

Kreislauf über die gesamte Höhe des Behälters ergibt sich eine bessere Sauerstoffausnutzung, da die Sauerstoffdifferenz bei der Umwälzung größer ist. Die zunächst durch die Belüftungseinrichtung mit Sauerstoff geladene Biomasse wird hiebei durch einen der beiden Räume von unten nach oben gepumpt und gelangt anschließend oberhalb der Oberkante bzw. der oberen freien Stirnfläche des Mantels in den Kreislaufsog der sich abwärts bewegenden Flüssigkeitssäule. Der bei der Aufwärtsbewegung durch die Belüftungseinrichtung eingetragene Sauerstoff wird bis zu diesem Zeitpunkt verbraucht bzw. perlt durch den Flüssigkeitsspiegel in den Raum oberhalb des Flüssigkeitsspiegels, aus welchem er abgeführt werden kann. Bei der Abwärtsbewegung der Flüssigkeit wird kein neuer Sauerstoff eingetragen und es kann daher der anaerobe Denitrifikationsprozeß ablaufen. An der Stelle der Bewegungsumkehr der Flüssigkeit von der zunächst aufwärtsgerichteten Strömung in den Bereich der abwärtsgerichteten Strömung wird somit eine an Sauerstoff verarmte Zone geschaffen und dadurch, daß das behandelte Wasser bzw. Belebtschlamm aus der sauerstoffverarmten Zone genommen wird, wird nachfolgend eine geringere Neigung zur Schwimmschlammbildung im Nachklärbecken beobachtet. Die einfache Steuerungsmöglichkeit des Sauerstoffeintrages läßt sich dadurch verwirklichen, daß der Nitratgehalt nahe dem Flüssigkeitsspiegel im Behälter gemessen wird und der Sauerstoffeintrag in Abhängigkeit von dem gemessenen Nitratgehalt geregelt wird. Im Bereich der abwärtsgerichteten Strömung erfolgt die anaerobe Umsetzung, bei welcher Nitrate in Stickstoff und in Verbindung mit Kohlenstoffträgern der Sauerstoff zu $CO_2$ umgesetzt werden.

Zur Erzielung der gewünschten Umwälzbewegung der Biomasse und des Wassers ist die Einrichtung zum Verteilen der belüfteten Biomasse und des Wassers in besonders vorteilhafter Weise als Belüfter, insbesondere als Mischstrahlbelüfter, ausgebildet, deren Düsen mit einer Luftzuführungsleitung verbunden sind und im wesentlichen radial nach außen gerichtet sind.

Derartige, im wesentlichen radial nach außen gerichtete Düsen lenken den Flüssigkeitsstrom an die Wand des Behälters und es entsteht eine aufwärtsgerichtete Strömungskomponente. Um sicherzustellen, daß auch die Denitrifikation weitgehend vollständig abläuft, ist vorzugsweise die in den jeweils anderen der beiden Räume mündende Abwasserleitung nahe dem unteren Ende dieses Raumes angeschlossen.

Mit besonders einfachen Belüftungseinrichtungen kann das Auslangen gefunden werden, wenn die Strahlachsen der Düsen für die belüftete Biomasse und das Wasser in den äußeren Ringraum gerichtet sind. Bei einer derartigen Ausbildung ist die Wasserableitung an den inneren Mantelraum angeschlossen und durchsetzt den äußeren Ringraum.

Nach dem Abziehen des auch der anaeroben Umsetzung unterworfenen Abwassers kann die Biomasse neuerlich rückgewonnen werden und zumindest teilweise im Kreislauf geführt werden. Hiefür ist vorzugsweise die Ausbildung so getroffen, daß die Wasserableitung mit einer Absetzanlage, insbesondere einem Absetzbecken, einem Dekanter oder einem Emscher-Brunnen verbunden ist. Bei einer derartigen Ausbildung kann in besonders einfacher Weise wenigstens ein Teil des aus der Absetzanlage ausgetragenen Schlammes als Rücklaufschlamm dem vorgeschalteten Behälter zur Belüftungseinrichtung und Vermischung mit zu reinigendem Abwasser rückgeführt werden.

Die Einrichtung ist in einfacher Weise so ausgebildet, daß die Verteilereinrichtung für die Biomasse und das Abwasser Treibstrahldüsen oder Mischdüsen für eine parallel zur Wand des Behälters aufwärtsverlaufende Strömung aufweist und daß die Strömungsrichtung im jeweils anderen durch den Mantel abgetrennten Raum entgegengesetzt der ersten Strömungsrichtung verläuft.

Um ein Ablagern von Biomasse an den Wänden zu verhindern bzw. derartige Ablagerungen wiederum zu beseitigen, sind in vorteilhafter Weise Reinigungsdüsen für das Abspülen von Schlamm von den Wänden des Behälters und/oder des Mantels vorgesehen. Ein gegebenenfalls nahe dem Flüssigkeitsspiegel im Behälter aufschwimmender Schlamm kann durch auf den Wasserspiegel in der Behältermitte gerichtete Sprühdüsen zum Auflösen gebracht werden.

Ein gegebenenfalls entstehender Überschußschlamm, welcher der neuerlichen Abwasserreinigung nicht rückgeführt wird, kann in einfacher Weise verbrannt oder als Proteinsubstrat weiterverwendet werden. Eine Kontrolle der Effizienz der Abwasserreinigung kann in besonders einfacher und rascher Weise durch den chemischen Sauerstoffbedarf, welcher durch Titration ermittelt werden kann, erreicht werden und in Abhängigkeit von einem zu hohen chemischen Sauerstoffbedarf kann die Umwälzung im Behälter über eine mehr oder minder lange Zeit aufrechterhalten werden oder eine Rückführung von zu reinigendem Wasser zur Belüftung vorgenommen werden. Bedingt durch die zyklische, oxidative und reduzierende Behandlung des Abwassers läßt sich eine weit höhere Effizienz bei der Reinigung im Vergleich zu Verfahren beobachten, bei welchen anschließend an einen aeroben Umsetzungsprozeß lediglich ein anaerober Umsetzungsprozeß vorgenommen wird. Die zyklische Wiederholung kann hiebei ohne zusätzlichen Energieaufwand lediglich durch Aufrechterhalten des Kreislaufstromes im Behälter erzielt werden. Insgesamt stellt die erfindungsgemäße Einrichtung auch eine besonders preisgünstige und anlagentechnisch einfach realisierbare Einrichtung dar. Der durch die Belüftungseinrichtung eingetragene Sauerstoff wird hiebei während des aerob ablaufenden Prozesses zu 70% veratmet, wobei $CO_2$ entsteht, und geht zu etwa 25% in die Trockensubstanz. Lediglich etwa 5% werden für die Nitrifikation, d.h. die Umsetzung von Stickstoff-Wasserstoffverbindungen zu Stickstoff-Sauerstoffverbindungen, insbesondere Nitraten, verwendet.

Die Erfindung wird nachfolgend an Hand eines in der Zeichnung dargestellten Ausführungsbeispieles näher erläutert.

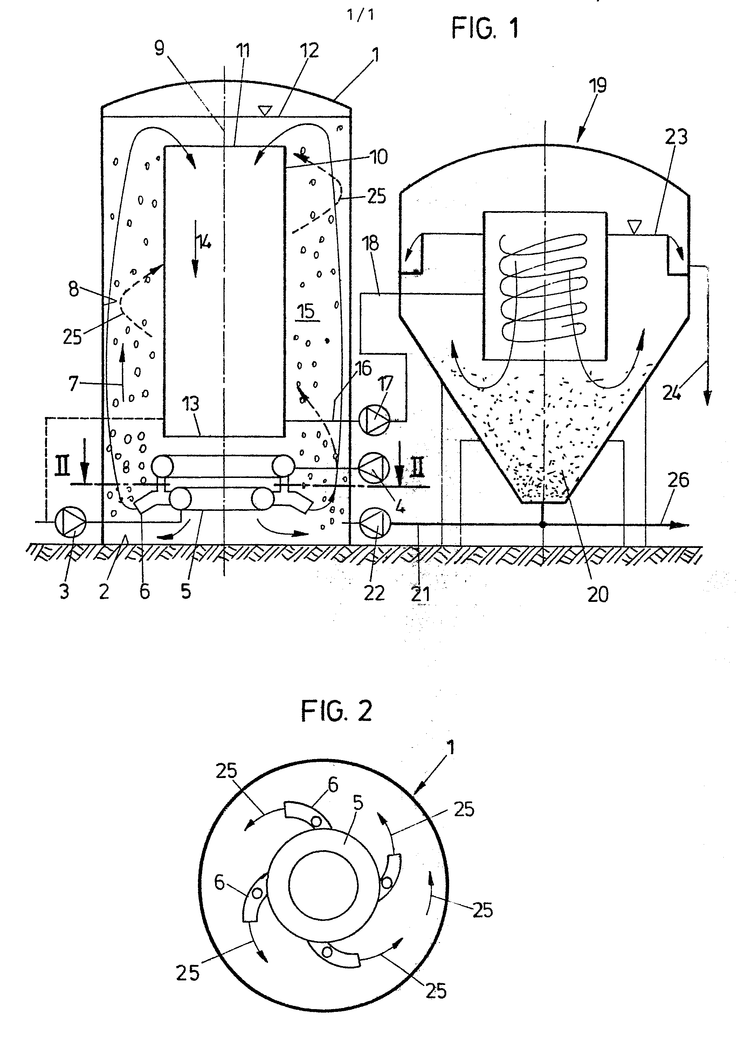

In dieser zeigen Fig.1 eine schematische Seitenansicht und Fig. 2 einen Schnitt nach der Linie II-II der Fig.1.

In Fig. 1 der Zeichnung ist mit 1 ein im wesentlichen zylindrischer Behälter bezeichnet, welchem nahe seiner Bodenfläche 2 über eine Pumpe 3 Abwasser und Biomasse zugeführt wird. Über einen Kompressor bzw. ein Gebläse 4 wird Preßluft eingebracht und einer Mischstrahlbelüftungseinrichtung 5 zugeführt. Das aus den Mischstrahldüsen 6 austretende belüftete Material wird hiebei über die Düsen relativ zur Radialebene abwärts oder im spitzen Winkel aufwärts ausgestoßen, wodurch sich eine Bewegungsrichtung der belüfteten Biomasse in Richtung des Pfeiles 7 aufwärts ergibt. Die Biomasse wird nun längs der Innenwand des Behälters, welche mit 8 bezeichnet ist, aufwärts transportiert. In Abstand zur Innenwand des zylindrischen Behälters 1 ist koaxial zur Achse 9 ein Rohr 10 angeordnet, dessen obere Stirnfläche 11 unterhalb des Flüssigkeitsspiegels 12 liegt. Ebenso liegt die untere offene Stirnfläche 13 oberhalb der Belüftungseinrichtung. Sobald das belüftete Material bzw. die Biomasse die Oberkante des Rohres 10 erreicht hat, perlt der gegebenenfalls noch nicht verbrauchte Sauerstoff auf und das Material gelangt in den Sog in Richtung des Pfeiles 14 abwärts. Innerhalb des rohrförmigen Teiles bzw. innerhalb des Mantels 10 erfolgt nun keine weitere Sauerstoffzufuhr, so daß hier der anaerobe Prozeß ablaufen kann. Nahe der Unterkante bzw. der unteren Stirnfläche 13 des rohrförmigen Teiles mit der Mantelfläche 10 wird nun über eine den Ringraum 15 durchsetzende Leitung 16 das denitrifizierte Abwasser aufgetragen und gelangt über eine Pumpe 17 und eine Leitung 18 in eine Absetzvorrichtung 19. Der in dieser Absetzvorrichtung angesammelte Schlamm wird nahe der Unterkante der Absetzvorrichtung gesammelt und abgezogen. Ein Teil dieses Schlammes 20 gelangt über eine Rücklaufleitung 21 und eine Pumpe 22 zurück zum Behälter 1 und wird für die neuerliche Durchführung eines weiteren Belebtschlammreinigungsverfahrens herangezogen. Das über die Leitung 18 abgezogene Reinwasser wird nach der Sedimentation über einen Überlauf 23 abgezogen und kann über eine Leitung 24 in den Vorfluter gelangen.

Wie in Fig. 2 ersichtlich sind die Mischstrahldüsen in der Draufsicht spitzwinkelig zur Tangente an die Behälterwand orientiert. Die Bewegungsrichtung der belüfteten Biomasse folgt hiebei bevorzugt der Richtung der Pfeile 25 in Fig. 1 und 2 und verläuft im wesentlichen schraubenlinienförmig, wodurch eine gute Durchmischung und Verbesserungen in der aeroben Phase eintreten.

Der nicht rückgeführte Anteil des Schlammes wird als Überschußschlamm über eine Leitung 26 ausgetragen und kann einer üblichen Verwertung zugeführt werden.

Patentansprüche

1. Einrichtung zum Aufarbeiten von Abwasser nach dem Belebtschlammverfahren, insbesondere zum Nitrifizieren und Denitrifizieren bei der biologischen Abwasserreinigung, mit einem turmförmigen Behälter und einem im Behälter angeordneten im wesentlichen parallel zur geometrischen Höhenlinie angeordneten, insbesondere rohrförmigen Mantel, dessen Mantelfläche in Abstand von der Innenwand des Behälters verläuft, dadurch gekennzeichnet, daß die Höhe des turmförmigen Behälters größer ist als jede der beiden Abmessungen in der Ebene der Standfläche, daß der Mantel (10) zu beiden Stirnseiten offen ausgebildet ist wobei die obere offene Stirnfläche (11) unterhalb der Füllhöhe (12) des Behälters (1) und die untere offene Stirnfläche (13) in Abstand von der Bodenwand des Behälters (1) angeordnet ist, und daß ein Anschluß für die Zufuhr von Biomasse und Wasser im unteren Bereich des Behälters (1) mündet und eine Einrichtung zur Belüftung derselben im unteren Bereich des Behälters zum Verteilen der belüfteten Biomasse und des Wassers in den zwischen Behälter und Mantel ausgebildeten Raum, insbesondere Ringraum (15), oder den vom Mantel umgebenen Raum sowie eine in den jeweils anderen der beiden Räume mündende Wasserableitung (16) vorgesehen sind.

2. Einrichtung nach Anspruch 1, dadurch gekennzeichnet, daß die Einrichtung zum Verteilen der belüfteten Biomasse und des Wassers als Belüfter, insbesondere als Mischstrahlbelüfter (5), ausgebildet ist, deren Düsen (6) mit einer Luftzuführungsleitung verbunden sind und im wesentlichen radial insbesondere in Umfangsrichtung nach außen (Pfeil 25) gerichtet sind.

3. Einrichtung nach Anspruch 1 oder 2, dadurch gekennzeichnet, daß die in den jeweils anderen der beiden Räume mündende Wasserableitung (16) nahe dem unteren Ende dieses Raumes angeschlossen ist.

4. Einrichtung nach Anspruch 1, 2 oder 3, dadurch gekennzeichnet, daß die Strahlachsen der Düsen (6) für die belüftete Biomasse und das Wasser in den äußeren Ringraum (15) gerichtet sind und daß die Wasserableitung (16) an den inneren Mantelraum angeschlossen ist und den äußeren Ringraum (15) durchsetzt.

5. Einrichtung nach einem der Ansprüche 1 bis 4, dadurch gekennzeichnet, daß die Verteilereinrichtung für die Biomasse und das Abwasser Treibstrahldüsen oder Mischdüsen (6) für eine parallel zur Wand (8) des Behälters (1) aufwärts verlaufende Strömung (Pfeil 7) aufweist und daß die Strömungsrichtung im jeweils anderen durch den Mantel (10) abgetrennten Raum entgegengesetzt (Pfeil 14) der ersten Strömungsrichtung (Pfeil 7) verläuft.

6. Einrichtung nach einem der Ansprüche 1 bis 5, dadurch gekennzeichnet, daß Reinigungsdüsen für das Abspülen von Schlamm von den Wänden (8) des Behälters (1) und/oder des Mantels (10) vorgesehen sind.

7. Einrichtung nach einem der Ansprüche 1 bis 6, dadurch gekennzeichnet, daß auf den Wasserspiegel (12) in der Behältermitte Sprühdüsen zum Auflösen von Schwimmschlamm gerichtet sind.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int CI 4) |
|---|---|---|---|
| X | TECHNISCHE MITTEILUNGEN KRUPP, Band 36, Nr. 2, August 1978, Seiten 41-48; E. KRIEGEL u.a.: "Entwicklung eines Bioreaktors nach dem Umlaufprinzip" * Seite 41, rechte Spalte, Zeilen 3-40; Seite 44, Abbildung 6; Seite 47, Abbildung 10 * | 1,3,7 | C 02 F 3/30 C 02 F 3/12 C 02 F 3/20 |
| A | FR-A-2 235 089 (AGENCE NATIONALE DE VALORISATION E LA RECHERCHE) * Seite 10, Ansprüche 1,7; Seite 3, Zeilen 2-20 * | 1,3 | |
| A | US-A-4 231 874 (R.W. HEILIGTAG) * Spalte 1, Zeile 51 - Spalte 2, Zeile 11; Spalte 2, Zeilen 29-49; Spalte 4, Zeilen 14-58; Spalte 5, Zeilen 23-46 * | 1,2,4, 5 | RECHERCHIERTE SACHGEBIETE (Int. Cl.4) |
| A | FR-A-2 516 910 (AGROTECHNIKA) * Seite 15, Zeile 17 - Seite 17, Zeile 5 * | 1 | C 02 F C 12 M |
| A | US-A-3 997 437 (J.E. PRINCE u.a.) * Figuren 2,3,5-7 * | 1,2 | |

-/-

Der vorliegende Recherchenbericht wurde für alle Patentansprüche erstellt

| Recherchenort DEN HAAG | Abschlußdatum der Recherche 25-07-1985 | Prüfer TEPLY J. |
|---|---|---|

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 033 772  (UHDE) <br> * Titelseite; Zusammenfassung; Figur 1 * | 1 | |

- - - - -

RECHERCHIERTE
SACHGEBIETE (Int. Cl.4)

Der vorliegende Recherchenbericht wurde für alle Patentansprüche erstellt

| Recherchenort <br> DEN HAAG | Abschlußdatum der Recherche <br> 25-07-1985 | Prüfer <br> TEPLY J. |
|---|---|---|